Europäisches Patentamt

(19) European Patent Office

Office européen des brevets

(11) Publication number: **0 032 597**
**B1**

(12) **EUROPEAN PATENT SPECIFICATION**

(45) Date of publication of patent specification: **30.11.83**

(51) Int. Cl.³: **C 09 D 5/16, C 09 D 3/82**

(21) Application number: **80201094.2**

(22) Date of filing: **17.11.80**

(54) Coated marine structure.

(30) Priority: **11.12.79 GB 7942682** .

(43) Date of publication of application:
**29.07.81 Bulletin 81/30**

(45) Publication of the grant of the patent:
**30.11.83 Bulletin 83/48**

(84) Designated Contracting States:
**BE DE FR GB NL**

(56) References cited:
**DE - A - 2 101 074**
**FR - A - 2 297 901**
**FR - A - 2 375 305**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Riches, Kenneth Maurice**
**Thornton Research Centre**
**Chester Cheshire (GB)**
Inventor: **Shone, Edward Brian**
**Thornton Research Centre**
**Chester Cheshire (GB)**
Inventor: **Bracken, John William**
**Thornton Research Centre**
**Chester Cheshire (GB)**
Inventor: **Worrall, Donald**
**Thornton Research Centre**
**Chester Cheshire (GB)**

(74) Representative: **Puister, Antonius Tonnis, Mr. et al,**
**P.O. Box 302**
**NL-2501 CH The Hague (NL)**

Courier Press, Leamington Spa, England.

# 0 032 597

Coated marine structure

The invention relates to a marine structure, the outer surface of which is at least partly coated with one or more layers.

The surfaces of marine structures which are immersed in seawater, such as ships' hulls, buoys, legs of drilling platforms, riser pipes, need to be protected against fouling by organisms such as grasses, algae, barnacles, tube worms, serpula, oysters, ascidia, bryozoa and the like. The organisms adhere to the surface, adding weight thereto, and also increase frictional resistance resulting in higher stresses on drilling and production platforms and the like due to a greater resistance to wave action, and in lower speeds and higher fuel consumption of ships. In order to avoid the necessity of frequent removal of the fouling organisms, coatings of marine structures have been developed which hamper the adherence of the organisms to the marine structure. These coatings comprise paints which contain poisonous substances based upon metals such as copper, tin, lead, mercury and arsenic. The period over which these paints can prevent fouling is rather limited, and moreover in the application of these coatings toxicity problems may be encountered.

Coatings on which the organisms adhere with difficulty, such as silicone rubbers have also been described to have anti-fouling properties, but they do not provide a decisive solution because they have a low tear-cohesive strength, and are easily torn from the surface of the marine structure.

In French patent specification 2,375,305 there is disclosed a marine structure, the outer surface of which is at least partly coated with one or more layers of which the outermost layer comprises a vulcanized silicone rubber and a fluid organic compound.

It has now been found that specific vulcanized silicone rubbers which have only a small silicium content, combine a high cohesive strength and a low tendency to be torn off with good anti-fouling properties.

According to the present invention there is provided a marine structure, the outer surface of which is at least partly coated with one or more layers, which is characterized in that the outermost layer comprises a vulcanized silicone rubber which rubber contains silicon-free polymeric segments which are constituted of recurrent units.

The said silicon-free polymeric segments which are constituted of recurrent units (further to be indicated as segments) may consist of several types of recurrent units. Preferably, the unit weight of each recurring unit is at least 30, in particular at least 50. (Unit weight stands for the weight ratio of a unit and a hydrogen atom). The segments may, for example, consist of polymerization products of 1,2-epoxides, such as alkylene oxides, or consist of condensation products of 1,2-epoxides and dihydroxy compounds such as bisphenols, e.g., condensation products of epichlorohydrin and 2,2-(4-hydroxyphenyl)propane. Segments derived partly or totally from epoxides are very suitably attached to silicon atoms present in the silicone rubber by means of an oxyphenylene- or an amino-phenylene group, in which groups the phenylene group is bound to a silicon atom and the oxygen, respective nitrogen, atom to the epoxide-derived segment.

Other examples of segments are those derived from urethane based units; they may suitably have been obtained by polyaddition of di-isocyanates, such as toluene-di-isocyanate and/or hexane-methylene-di-isocyanate and dihydroxy compounds, such as dihydroxy polyesters or dihydroxy polyethers. Polyurethane segments are very suitably attached to silicon atoms of the silicone rubber by means of an oxyphenylene group or an aminophenylene group, in which groups the phenylene group is bound to be a silicon atom and the oxygen, respective nitrogen, atom to the polyurethane segment.

It is preferred that the segments consist of recurrent units derived from polymerization of compounds containing ethylenic unsaturation. Very suitably segments of this type are linked to silicone rubber via alkylene or alkylidene groups, in particular methylene groups.

The segments are very suitably obtained by grafting onto the vulcanized silicone rubber, or they may be present in the organo-polysiloxane from which the silicone rubber has been prepared by vulcanization. It is also possible to carry out the vulcanization of the organic polysiloxane and the grafting simultaneously.

It is preferred that the outermost layer has been prepared by vulcanizing an organopolysiloxane which contains segments which segments are constituted of recurrent units which units are derived from monomers containing ethylenic unsaturation.

Segments which are linked via alkylene or alkylidene groups to a silicon atom of the polysiloxane are very suitably obtained by grafting organopolysiloxane backbones which contain alkyl groups attached to a silicon atom with graft components which contain ethylenic unsaturation. The said alkyl groups very suitably contain at most four carbon atoms, methyl groups being preferred. The organo-polysiloxane backbones onto which the segments are to be grafted may, of course, besides alkyl groups contain other groups, such as phenyl groups, substituted phenyl groups, vinyl groups, halogen (e.g., chlorine and/or fluorine) containing groups (e.g., haloalkyl groups), etc. Very suitably the organopolysiloxane backbone consists of polydimethylsiloxane.

Because the organopolysiloxanes which contain segments are to be vulcanized, they need to possess certain groups which make them suitable for vulcanization. It is attractive that the said groups

2

are already present in the organopolysiloxanes onto which the segments are to be grafted.

The grafting of compounds with ethylenic unsaturation onto the organopolysiloxane backbones may be achieved by any eligible means. Very suitably the grafting is accomplished by polymerization, with the aid of a free radical initiator, of compounds with ethylenic unsaturation which are suited for such type of polymerization (also to be called monomers). Very suitably the monomers are selected from unsaturated aliphatic hydrocarbons, unsaturated halogenated hydrocarbons, vinyl aromatic compounds, unsaturated acids or esters, unsaturated amides, unsaturated nitriles or any mixture of two or more thereof. Examples are the low molecular weight hydrocarbons, such as ethylene, propylene, butylene, isobutylene; vinyl halides, such as vinyl chloride and vinyl fluoride; vinyl esters of organic acids, such as vinyl acetate; styrene, ring-substituted styrenes and other vinyl aromatics, such as vinyl-pyridine and vinylnaphthalene; acrylic acid and methacrylic acid and derivatives thereof including the salts, esters, amides, methacrylonitrile and acrylonitrile, acrolein and methacrolein; N-vinyl compounds, such as N-vinylcarbazole, N-vinylpyrrolidone and N-vinylcaprolactam.

Di-substituted ethylene derivatives which are also very suitable are vinylidene chloride, vinylidene fluoride, vinylidene cyanide, maleic anhydride, esters of fumaric and maleic acids, stilbene. The monomers may be used singly, or in combination of two or more.

Preferably, at least part of the monomers containing ethylenic unsaturation consists of unsaturated acids or derivatives, in particular esters, thereof. Very conveniently at least part of the monomers consists of esters of acrylic acid or methacrylic acids and monovalent alcohols. Examples of these esters are methyl methacrylate, ethyl methacrylate, propyl methacrylate, butyl methacrylate, methyl acrylate, ethylacrylate, propylacrylate, and in particular butylacrylate.

It is often of advantage that at least part of the monomers consists of styrene.

Free radical initiators which are very suitable to be used for grafting the monomers onto the organopolysiloxane are hydroperoxides, such as t-butyl hydroperoxide, cumene hydroperoxide; dialkylperoxides, such as di-t.-butyl peroxide; peresters, such as t.-butyl perbenzoate. Benzoyl peroxide and azo-isobutyronitrile may also be used as free radical initiators.

The length of the segments and the number thereof will depend on the grafting conditions, such as temperature, concentration of monomers, ratio of monomers to organo-polysiloxane, amount of free radical initiator; these conditions can vary between wide limits.

Very suitably the weight percentage of the segments (calculated on the ultimate vulcanized rubber) is from 20 to 80, in particular from 30 to 60.

The vulcanization of the organo-polysiloxanes which contain segments is very suitably carried out after the said organo-polysiloxanes have been applied onto the surface of the marine structure.

In order to achieve vulcanization the organo-polysiloxanes which contain segments need to possess certain functional groups as explained above. The specific type of these groups depends on the method of vulcanization. Although methods exist in which organo-polysiloxanes are vulcanized at elevated temperatures, for the present purpose methods by which the vulcanization can be carried out at ambient temperature are preferred; there are two groups of such methods, viz. the two-pack RTV-system and the one-pack RTV-system.

In the two-pack RTV-system the organo-polysiloxane to be vulcanized possess a silanol end group. The vulcanization is achieved with the aid of a cross-linking agent, usually ethylsilicate, which can be mixed with the organopolysiloxane. Just before application of the mixture a suitable catalyst (in general an organic tin-salt such as dibutyltin dilaurate) is blended in, and vulcanization by cross-linking starts immediately. it is also possible to add the cross-linking agent partly or totally in admixture with the catalyst to the organo-polysiloxane to be vulcanized. Solvents may also be present in one or both of the two components to be mixed.

In the one-pack RTV-system an organopolysiloxane which contains a silanol group has been reacted with a compound of general formula $RSiX_3$, in which R stands for hydrocarbyl (in general methyl), and X for a hydroxyl group or a group which contains a hydrolyzable oxygen linkage (e.g., acetoxy) or an other reactive site (e.g., ketoxim). Solvents may be also present in the one-pack RTV-system, which must be kept protected from moisture. Vulcanization by cross-linking occurs when the pack is contacted with water, e.g., is contacted with a moist atmosphere.

Very suitably the said outermost layer comprises besides the vulcanized silicone rubber a fluid organic compound, which on the one hand is liquid at the temperatures prevailing in sea-water, and on the other hand is not volatile at ambient temperature. Accordingly, the said fluid organic compound must have a boiling point at atmospheric pressure of at least 250°C. Very suitably the fluid organic compound is applied onto the marine structure in admixture with the organopolysiloxane to be vulcanized and accordingly it is of advantage that it is compatible therewith, so that a homogeneous mixture can be prepared of the organopolysiloxane to be vulcanized and the amount of fluid organic compound to be incorporated. No significant short term phase separation is to occur before vulcanization, although slow release of the fluid organic compound from the vulcanized silicone rubber, in particular exudation, may occur, and is considered to be of advantage.

To aid the dispersion of organic fluid in the organopolysiloxane to be vulcanized it is of advantage that a dispersing agent is present in the mixture.

Very suitable fluid organic compounds to be present in the outermost layer of the marine structure are silicone fluids, which are defined as polydihydrocarbyl-siloxanes (of which the hdyrocarbyl groups may be substituted with hetero atoms). The hydrocarbyl groups may be alkyl groups (in particular methyl groups) or all or part thereof may be aryl groups (in particular phenyl groups). Silicone fluids of which the hydrocarbyl groups consist partly of methyl groups and partly of phenyl groups are very suitable.

Other fluid organic compounds which are very suitable to be present in the outermost layer of the marine structure are hydrocarbons. As examples may be mentioned mineral oils and fractions thereof, in particular lubricating oils, such as technical white oils.

Other types of hydrocarbons very suitable to be used as fluid organic compounds are low molecular weight polydienes, such as polybutadiene and polyisoprene, and in particular low molecular weight polyolefins (e.g., with a molecular weight up to 5,000), such as ethylene/propylene copolymers, and in particular polyisobutene, preferably with a molecular weight from 300—500.

The fluid organic compound may also consist of compounds which are indicated as plasticizers. As example of plasticizers may be mentioned esters of carboxylic acids, e.g., of fatty acids, such as lauric acid and stearic acid, esters of dicarboxylic acids, such as adipic acid, azelaic acid, sebacic acid, phthalic acid (e.g., dinonylphthalate) and esters of polyhydric alcohols, such as erythritol. The esters may also comprise hetero-atoms and/or hetero groups in their hydrocarbon chains which may, e.g., contain hydroxyl groups and/or halogen atoms, such as chlorine or fluorine, or consist of perfluorinated carbon chains.

Other types of plasticizers which may be used are phosphorus containing compounds, such as esters of phosphorus acids, in particular of phosphoric acid (e.g., tricresyl phosphate).

Plasticizers which consist of halogenated hydrocarbons, such as chlorinated or fluorinated hydrocarbons are also suitable.

Other types of suitable fluid organic compounds are low molecular weight, polyisocyanates, polyurethanes and polyepoxides, e.g., polyethylene oxide, polypropylene oxide and copolymers of ethylene oxide and propylene oxide and other oxiranes.

It will be understood that the fluid organic compounds to be used according to the invention are not limited to the type of compounds described above. Any fluid organic compound which is compatible to some extent with the silicone rubber may be used.

In case the fluid organic compound is compatible with the silicone rubber only in amounts which are not sufficient to ensure a long period of anti-fouling activity, the fluid organic compound is very suitably incorporated in the silicone rubber in an encapsulated form. The material used for the encapsulation is to be slowly permeable for the encapsulated fluid organic compound, so that a low concentration of this compound in the silicone rubber is maintained, enabling exudation of the fluid organic compound from the silicone rubber. The encapsulating material very suitably consists partly or totally of a polymer and may, e.g., be a silicone rubber or other type of rubbery material, or may be based on polyester, polyurethane or cellulose derivatives or any other suitable polymeric material which allows a slow release of the encapsulated fluid into the silicone rubber.

The amount of the fluid organic compound present may vary between wide limits. Amounts from 0.1 to 100 pbw on 100 pbw of vulcanized silicone rubber are very suitable.

As a matter of course diluents for the fluid organic compounds may be present in the coatings according to the invention. Less effective fluid compounds which may have a boiling point at atmospheric pressure below 250°C may be used as diluents or carriers which contain therein only relatively small concentrations of the more preferred fluid organic compounds.

If desired, materials which enhance the strength of the silicone rubber may also be incorporated. As examples may be mentioned fibrous materials (e.g., glass fibres, glass flakes or nylon fibres) and powdered polymers, such as polytetrafluorethylene.

The fluid organic compound is suitably applied onto the surface of the marine structure in admixture with the organopolysiloxane to be vulcanized, and the latter is vulcanized in situ. For that reason the fluid organic compound to be used should be of such structure that it does not or only to an insignificant amount take part in the reactions which lead to cross linking of the organopolysiloxane to form a vulcanized silicone rubber.

The invention also relates to a method for the manufacture of a coated marine structure by coating at least part of the outer surface of a marine structure by application of an organopolysiloxane which contains segments linked to the said polysiloxane, which segments are constituted of recurrent units, which units are preferably derived from monomers containing ethylenic unsaturation, and vulcanizing the said polyorganosiloxane. If desired, fluid organic compounds which are liquid at the temperatures prevailing in sea-water and have a boiling point of at least 250°C may be incorporated in the organo-polysiloxanes to be applied onto the marine structure.

The outermost layer according to the invention may be applied onto the surface of the marine structure by any suitable means, such as brushing, spraying and the like.

The surface to be coated according to the invention may have been pretreated in order to increase the adhesion of the coating according to the invention thereto, e.g., by sand-blasting and/or application of an adhesive layer. Other coatings may also have been applied, e.g., an anti-corrosive coating and/or

**0 032 597**

an anti-fouling coating of prior art. The coatings according to the invention may also comprise metal-containing anti-fouling agents of prior art.

The invention also relates to mixtures which, when applied onto a structure can form a coating layer by vulcanization, which mixtures comprise an organo-polysiloxane which contains segments, which segments are constituted of recurrent units, which units are preferably derived from monomers containing ethylenic unsaturation, and a fluid organic compound which is liquid at the temperatures prevailing in sea-water and has a boiling point at atmospheric pressure of at least 250°C.

Examples

Fibre glass panels were coated with a conventional anti-rust system and subsequently with anti-fouling compositions according to the invention with a layer thickness of 150—200 μ.

The anti-fouling compositions according to the invention were formed by in situ vulcanization achieved by coating the fibre glass panels with a freshly prepared mixture of a) a commercial organo-polysiloxane which contained grafted polymeric segments based on styrene (20—25%w) and butylacrylate (30—40%w) and b) as a catalyst a blend of a tin salt and ethylsilicate. If appropriate fillers and/or organic compounds and/or dispersants were also incorporated in the organo-polysiloxane mentioned under a).

The test panels thus obtained were immersed in sea-water at Poole Harbour and their condition was inspected after three months. The condition of the panels was assessed as they appeared on removal from the water and also following low-pressure water washing. This washing was carried out to obtain an indication of the strength of attachment of the fouling and can be considered to be somewhat analogous to the conditions experienced on a moving vessel.

The Table shows the results.

TABLE

Conditions after 3 months

| Coating formulation | | Parts by weight | as removed from sea-water | after low pressure water wash |
|---|---|---|---|---|
| 1) | organopolysiloxane | 100 | thin film of | small amount |
| | $Fe_3O_4$ filler | 4 | slime with | of slime |
| | catalyst | 5 | isolated weed | isolated weed |
| 2) | organopolysiloxane | 100 | thin film of | small amount |
| | polyisobutylene | | slime with | of slime and |
| | mol. wt. 350 | 20 | isolated weed | isolated weed |
| | $Fe_3O_4$ filler | 4 | | |
| | catalyst | 4 | | |
| | dispersant | 0.25 | | |
| 3) | organopolysiloxane | 100 | thin film of | isolated weed |
| | | | slime with | |
| | technical white oil | 20 | isolated weed | |
| | $Fe_3O_4$ filler | 4 | | |
| | catalyst | 4 | | |
| | dispersant | 0.25 | | |
| 4) | organopolysiloxane | 100 | thin film of | no apparent |
| | | | slime with | fouling |
| | dimethylpolysiloxane | 20 | isolated weed | |
| | $Fe_3O_4$ filler | 4 | | |
| | catalyst | 4 | | |
| | dispersant | 0.25 | | |

5

## Claims

1. A marine structure, the outer surface of which is at least partly coated with one or more layers, characterized in that the outermost layer comprises a vulcanized silicone rubber which rubber contains silicon-free polymeric segments which are constituted of recurrent units.

2. A marine structure according to claim 1, in which each recurring unit has a unit weight (which stands for the weight ratio of a unit and a hydrogen atom) of at least 30.

3. A marine structure according to claim 2, in which the said unit weight is at least 50.

4. A marine structure according to any one of the preceding claims, in which the outermost layer has been prepared by vulcanizing an organopolysiloxane which contains silicon-free polymeric segments which are constituted of recurrent units.

5. A marine structure according to any one of the preceding claims, in which the silicon-free polymeric segments are derived from monomers containing ethylenic unsaturation.

6. A marine structure according to claim 5, in which the silicon-free polymeric segments are linked to silicon atoms in the said polysiloxane via alkylene or alkylidene groups.

7. A marine structure according to claim 6, in which the alkylene groups are methylene groups.

8. A marine structure according to any one of claims 5—7 in which at least part of the monomers containing ethylenic unsaturation consists of unsaturated acids or derivatives thereof.

9. A marine structure according to claim 8, in which the derivatives of unsaturated acids are esters.

10. A marine structure according to claim 9, in which the esters of unsaturated acids are esters of acrylic acid or methacrylic acid and monovalent alcohols.

11. A marine structure according to claim 10, in which the ester is butylacrylate.

12. A marine structure according to any one of claims 5—11, in which at least part of the monomers containing ethylenic unsaturation consists of styrene.

13. A marine structure according to any one of the preceding claims, in which the weight percentage of the silicon-free segments (calculated on the ultimate vulcanized rubber) is from 20 to 80, in particular from 30 to 60.

14. A marine structure according to any one of the preceding claims, in which the outermost layer comprises a fluid organic compound which is liquid at the temperature prevailing in seawater and has a boiling point at atmospheric pressure of at least 250°C.

15. A marine structure according to claim 14, in which the fluid organic compound is a silicone fluid.

16. A marine structure according to claim 15, in which the silicone fluid consists of polydihydrocarbylsiloxanes.

17. A marine structure according to claim 16, in which the hydrocarbyl groups consist of methyl and/or phenyl groups.

18. A marine structure according to claim 14, in which the fluid organic compound consists of one or more hydrocarbons.

19. A marine structure according to claim 18, in which the fluid organic compound is a lubricating oil.

20. A marine structure according to claim 18, in which the fluid organic compound is a polyolefin with a molecular weight up to 500.

21. A marine structure according to claim 20, in which the polyolefin is polyisobutene with a molecular weight from 300—500.

22. A mixture which comprises an organopolysiloxane which contains silicon-free polymeric segments, which segments are constituted of recurrent units, and a fluid organic compound which is liquid at the temperatures prevailing in sea-water and has a boiling point at atmospheric pressure of at least 250°C.

23. A method for the manufacture of a coated marine structure by coating at least part of the outer surface of a marine structure by application of an organopolysiloxane which contains polymeric segments linked to said polysiloxane which segments are constituted of recurrent units, and vulcanizing the said polyorganosiloxane.

24. A method according to claim 23, in which the recurrent units are derived from monomers containing ethylenic unsaturation.

## Revendications

1. Une structure marine, dont la surface extérieure est au moins partiellement revêtue d'une ou plusieurs couches, caractérisée en ce que la couche extérieure comprend un caoutchouc de silicone vulcanisé qui contient des segments polymères exempts de silicium constitués d'unités structurales.

2. Une structure marine selon la revendication 1, dans laquelle chaque unité structurale a un poids unitaire (qui est le rapport en poids entre une unité et un atome d'hydrogène) d'au moins 30.

3. Une structure marine selon la revendication 2, dans laquelle le poids unitaire est d'au moins 50.

4. Une structure marine selon l'une quelconque des revendications précédentes, dans laquelle la couche extérieure a été préparée en vulcanisant un organopolysiloxane qui contient des segments polymères exempts de silicium constitués d'unités structurales.

5. Une structure marine selon l'une quelconque des revendications précédentes, dans laquelle les segments polymères exempts de silicium sont dérivés de monomères contenant une insaturation éthylénique.

6. Une structure marine selon la revendication 5, dans laquelle les segments polymères exempts de silicium sont liés à des atomes de silicium dans le polysiloxane par des groupes alcoylène ou alcoylidène.

7. Une structure marine selon la revendication 6, dans laquelle les groupes alcoylène sont des groupes méthylène.

8. Une structure marine selon l'une quelconque des revendications 5 à 7, dans laquelle au moins une partie des monomères contenant une insaturation éthylénique consiste en acides insaturés ou leurs dérivés.

9. Une structure marine selon la revendication 8, dans laquelle les dérivés d'acides insaturés sont des esters.

10. Une structure marine selon la revendication 9, dans laquelle les esters d'acides insaturés sont des esters d'acide acrylique ou d'acide méthacrylique et d'alcools monovalents.

11. Une structure marine selon la revendication 10, dans laquelle l'ester est l'acrylate de butyle.

12. Une structure marine selon l'une quelconque des revendications 5 à 11, dans laquelle au moins une partie des monomères contenant une insaturation éthylénique consiste en styrène.

13. Une structure marine selon l'une quelconque des revendications précédentes, dans laquelle le pourcentage en poids des segments exempts de silicium (calculé par rapport au caoutchouc vulcanisé final) est compris entre 20 et 80, en particulier entre 30 et 60.

14. Une structure marine selon l'une quelconque des revendications précédentes, dans laquelle la couche extérieure comprend un composé organique fluide qui est liquide à la température existant dans l'eau de mer et a un point d'ébullition sous la pression atmosphérique d'au moins 250°C.

15. Une structure marine selon la revendication 14, dans laquelle le composé organique fluide est un fluide de silicone.

16. Une structure marine selon la revendication 15, dans laquelle le fluide de silicone consiste en polydihydrocarbylsiloxanes.

17. Une structure marine selon la revendication 16, dans laquelle les groupes hydrocarbyle consistent en groupes méthyle et/ou phényle.

18. Une structure marine selon la revendication 14, dans laquelle le composé organique fluide consiste en un ou plusieurs hydrocarbures.

19. Une structure marine selon la revendication 18, dans laquelle le composé organique fluide est une huile lubrifiante.

20. Une structure marine selon la revendication 18, dans laquelle le composé organique fluide est une polyoléfine d'un poids moléculaire allant jusqu'à 5000.

21. Une structure marine selon la revendication 20, dans laquelle la polyoléfine est un poly-isobutène d'un poids moléculaire de 300 à 500.

22. Un mélange qui comprend un organopolysiloxane qui contient des segments polymères exempts de silicium, ces segments étant constitués d'unités structurales, et un composé organique fluide qui est liquide aux températures existant dans l'eau de mer et a un point d'ébullition sous la pression atmosphérique d'au moins 250°C.

23. Un procédé de fabrication d'une structure marine revêtue en revêtant au moins une partie de la surface extérieure d'une structure marine par application d'un organopolysiloxane qui contient des segments polymères liés au polysiloxane, ces segments étant constitués d'unités structurales, et en vulcanisant l'organopolysiloxane.

24. Un procédé selon la revendication 23, dans lequel les unités structurales sont dérivées de monomères contenant une insaturation éthylénique.

**Patentansprüche**

1. Ein Seewasser-Bauelement, dessen äußere Oberfläche mindestens teilweise mit einer oder mehreren Schichten überzogen ist, dadurch gekennzeichnet, daß die äußerste Schicht einen vulkanisierten Silikonkautschuk umfaßt, welcher Kautschuk siliciumfreie polymere Segmente aufweist, welche aus wiederkehrenden Einheiten aufgebaut sind.

2. Ein Seewasser-Bauelement gemäß Anspruch 1, in welchem jede wiederkehrende Einheit ein Einheits-Gewicht (welches für das Gewichtsverhältnis von einer Einheit und einem Wasserstoffatom steht) von mindestens 30 hat.

3. Ein Seewasser-Bauelement gemäß Anspruch 2, in welchem das besagte Einheits-Gewicht mindestens 50 beträgt.

4. Ein Seewasser-Bauelement gemäß irgendeinem der vorhergehenden Ansprüche, in welchem die äußerste Schicht durch Vulkanisieren eines Organopolysiloxans hergestellt worden ist, welches siliciumfreie polymere Segemente aufweist, welche aus wiederkehrenden Einheiten aufgebaut sind.

5. Ein Seewasser-Bauelement gemäß irgendeinem der vorhergehenden Ansprüche, in welchem die siliciumfreien polymeren Segmente von Monomeren abgeleitet sind, welche äthylenisch ungesättigte Bindungen enthalten.

6. Ein Seewasser-Bauelement gemäß Anspruch 5, in welchem die siliciumfreien polymeren Segmente über Alkylen- oder Alkylidengruppen an Siliciumatome in dem besagten Polysiloxan gebunden sind.

7. Ein Seewasser-Bauelement gemäß Anspruch 6, in welchem die Alkylengruppen Methylengruppen sind.

8. Ein Seewasser-Bauelement gemäß irgendeinem der Ansprüche 5 bis 7, in welchem mindestens ein Teil der äthylenartig ungesättigte Bindungen enthaltenden Monomeren aus ungesättigten Säuren oder deren Derivaten bestehen.

9. Ein Seewasser-Bauelement gemäß Anspruch 8, in welchem die Derivate von ungesättigten Säuren Ester sind.

10. Ein Seewasser-Bauelement gemäß Anspruch 9, in welchem die Ester von ungesättigten Säuren Ester von Acrylsäure oder Methacrylsäure und einwertigen Alkoholen sind.

11. Ein Seewasser-Bauelement gemäß Anspruch 10, in welchem der Ester Butylacrylat ist.

12. Ein Seewasser-Bauelement gemäß irgendeinem der Ansprüche 5 bis 11, in welchem mindestens ein Teil der äthylenartig ungesättigte Bindungen aufweisenden Monomeren aus Styrol besteht.

13. Ein Seewasser-Bauelement gemäß irgendeinem der vorhergehenden Ansprüche, in welchem der Gewichtsprozentsatz an siliciumfreien Segmenten (berechnet auf den als Endprodukt erhaltenen vulkanisierten Kautschuk) von 20 bis 80 und insbesondere 30 bis 60 beträgt.

14. Ein Seewasser-Bauelement gemäß irgendeinem der vorhergehenden Ansprüche, in welchem die äußerste Schicht eine fließfähige organische Verbindung enthält, welche bei der in Seewasser vorherrschenden Temperatur flüssig ist und bei Atmosphärendruck einen Siedepunkt von mindestens 250°C aufweist.

15. Ein Seewasser-Bauelement gemäß Anspruch 14, in welchem die fließfähige organische Verbindung eine Silikonflüssigkeit ist.

16. Ein Seewasser-Bauelement gemäß Anspruch 15, in welchem die Silikonflüssigkeit aus Polydihydrocarbylsiloxanen besteht.

17. Ein Seewasser-Bauelement gemäß Anspruch 16, in welchem die Hydrocarbylgruppen aus Methyl- und/oder Phenylgruppen bestehen.

18. Ein Seewasser-Bauelement gemäß Anspruch 14, in welchem die fließfähige organische Verbindung aus einem oder mehreren Kohlenwasserstoffen besteht.

19. Ein Seewasser-Bauelement gemäß Anspruch 18, in welchem die fließfähige organische Verbindung ein Schmieröl ist.

20. Ein Seewasser-Bauelement gemä Anspruch 18, in welchem die fließfähige organische Verbindung ein Polyolefin mit einem Molekulargewicht bis zu 5000 ist.

21. Ein Seewasser-Bauelement gemäß Anspruch 20, in welchem das Polyolefin Polyisobuten mit einem Molekulargewicht von 300 bis 500 ist.

22. Eine Mischung, welche ein Organopolysiloxan aufweist, das siliciumfreie polymere Segmente enthält, welche Segmente aus wiederkehrenden Einheiten aufgebaut sind, und eine fließfähige organische Verbindung aufweist, welche bei den in Seewasser vorherrschenden Temperaturen flüssig ist und bei Atmosphärendruck einen Siedepunkt von mindestens 250°C hat.

23. Ein Verfahren zur Erzeugung eines beschichteten Seewasser-Bauelementes durch Beschichten mindestens eines Teils der äußeren Oberfläche eines Seewasser-Bauelementes unter Aufbringen eines Organopolysiloxans, welches polymere Segmente enthält, die mit dem Polysiloxan verbunden sind und welche Segmente aus wiederkehrenden Einheiten bestehen, und Vulkanisieren dieses Polyorganosiloxans.

24. Ein Verfahren gemäß Anspruch 23, in welchem die wiederkehrenden Einheiten von Monomeren abgeleitet sind, welche äthylenisch ungesättigte Bindungen enthalten.